# FASCICULE DE BREVET EUROPEEN

(11) **EP 4 561 893 B1**
(45) Date de publication et mention de la délivrance du brevet: **14.01.2026**
(21) Numéro de dépôt: 24727699.1
(22) Date de dépôt: 16.05.2024
(51) Int. Cl.: B62M 1/24, B62M 1/28, B62M 1/30

(54) **PÉDALIER POUR VÉLOCIPÈDE**
KETTENSATZ FÜR EIN VELOZIPED
CHAINSET FOR A VELOCIPEDE

(30) Priorité: 31.05.2023 BE 202305441
(43) Date de publication de la demande: 04.06.2025
(73) Titulaire: 4LowTech, 1348 Louvain-la-Neuve (BE)
(72) Inventeur: Meurice De Dormale, Rupert, 1342 Limelette (BE)
(74) Mandataire: Gevers Patents
(86) Numéro de dépôt international: PCT/EP2024/063599
(87) Numéro de publication internationale: WO 2024/245774

(56) Documents cités:
- CN-A- 106 741 535
- CN-A- 107 672 729
- DE-U- 1 988 498
- FR-A- 973 835
- FR-A1- 2 419 209
- FR-B1- 2 830 831
- KR-A- 20110 064 855

## Description

### Domaine technique

L'invention concerne un pédalier pour vélocipède ainsi qu'un vélocipède, par exemple une bicyclette, un tricycle ou un quadricycle, muni d'un tel pédalier.

### Art antérieur

Les pédaliers sont des dispositifs mécaniques répandus et populaires de par leur usage au sein de bicyclettes. Un pédalier comprend en général deux pédales mobiles en rotation autour d'un même axe qui sont couplées mécaniquement à au moins une roue dentée, appelé « plateau », par une manivelle. Une chaîne couple mécaniquement ce plateau et la roue arrière de la bicyclette. Le mouvement en rotation des pédales permet ainsi d'entraîner la roue arrière de la bicyclette, et de mettre l'ensemble de la bicyclette en mouvement.

Un défaut de ce type de pédalier est qu'une partie de l'énergie fournie par un cycliste sur le pédalier n'est pas convertie en mouvement de rotation de la roue de la bicyclette. Ce problème est expliqué de façon précise au regard de la figure 3 de la publication de brevet FR 2 830 831 B1. En plus, le document CN106741535A montre aussi toutes les caractéristiques du préambule de la revendication indépendante 1.

Pour le résoudre, cette même publication propose de se départir de pédales mobiles en rotation connues de tous et de les remplacer par des pédales mobiles en translation chacune reliée à une chaîne d'entraînement de la roue arrière selon un cycle fermé. Les chaînes correspondantes sont en particulier reliées entre elles par un moyen de renvoi, par exemple une poulie. Le pédalage se fait ainsi par un mouvement en translation alternatif de jambes du cycliste. Le retour d'une pédale « vers le haut », i.e. en son point départ d'application de poussée d'une jambe du cycliste, se fait en particulier passivement mécaniquement lorsque l'autre jambe du cycliste exerce une telle poussée « vers le bas » sur l'autre pédale. Les deux pédales sont ainsi couplée mécaniquement l'une à l'autre, le mouvement de l'une déterminant le mouvement de l'autre.

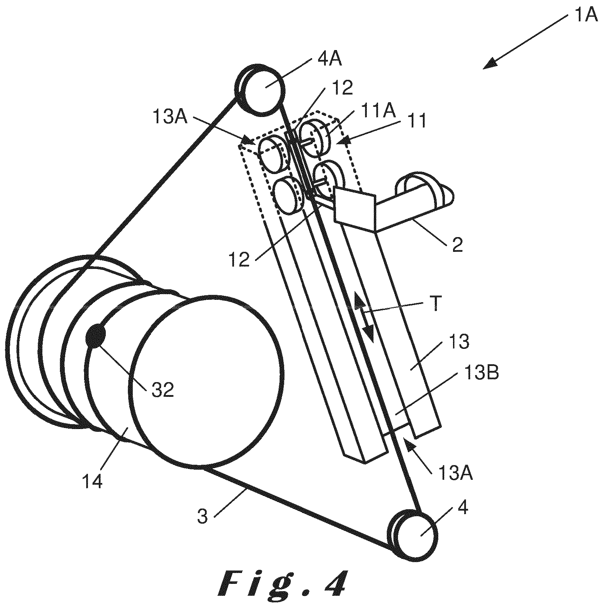

Tel qu'il est présenté au regard de la figure 4 de la publication suscitée, le pédalage en translation présente un meilleur rendement. Il présente également un caractère plus agréable pour le cycliste que le pédalage en rotation conventionnel.

Le rendement du pédalage en translation peut toutefois être amélioré tout en conservant le caractère agréable du pédalage en translation.

### Exposé de l'invention

Le but de l'invention est de fournir un pédalier pour vélocipède muni de deux pédales mobiles en translation de meilleur rendement. À cet effet, les pédales du pédalier selon l'invention sont découplées mécaniquement l'une de l'autre.

En d'autres termes, les deux pédales sont mobiles en translation de façon découplée mécaniquement l'une par rapport à l'autre, i.e. de façon indépendante l'une de l'autre. En découplant mécaniquement les pédales l'une de l'autre, le retour d'une pédale « vers le haut » ou, de façon plus générale, en un point de départ d'application de poussée, n'est plus conditionné au mouvement de l'autre pédale du pédalier. Ce retour peut être réalisé par l'utilisateur du vélocipède plus rapidement, de cinq à dix fois plus vite, de façon active et non passivement, sans contrainte mécanique associée à la position de l'autre pédale.

Ainsi, alors que sur un pédalier classique ou selon l'art antérieur, seule une des pédales est sollicitée à la fois, le pédalier selon la présente invention permet de transmettre de l'énergie via les deux pédales à la fois, de façon synchronisée ou non, et de réduire en outre significativement le temps de retour en position de chaque pédale, de façon synchronisée ou non. Ce gain de temps peut alors être mis à profit pour augmenter la part de poussée sur les pédales lors l'utilisation du vélocipède, et donc la quantité d'énergie transmise à une ou plusieurs roues du vélocipède par unité de temps.

Le pédalier permet par conséquent un déplacement par propulsion humaine plus rapide et plus efficace que les pédaliers connus de l'art antérieur.

Le pédalier selon l'invention est particulièrement adapté à des vélocipèdes destinés à des transports de charges lourdes et/ou sur de longues distances. De préférence, le pédalier selon l'invention comprend exactement deux pédales. Un pédalier comprenant un autre nombre de pédales tel que quatre ou six pédales n'est cependant pas exclu du cadre de l'invention, par exemple pour un tandem.

Tel qu'il est connu de l'homme du métier, le terme « vélocipède » se réfère à un véhicule à deux roues ou plus, à propulsion humaine. Dans le contexte de ce document, la propulsion humaine se fait notamment via le pédalier de l'invention, généralement par les membres inférieurs de l'utilisateur. Des exemples connus de vélocipèdes sont la bicyclette (ou vélo), le tricycle et le quadricycle.

Une propulsion qui serait exercée par les membres supérieurs de l'utilisateur n'est toutefois pas exclue du cadre de l'invention pour autant que, comme il sera compris aisément par l'homme du métier, le pédalier de l'invention soit agencé de façon appropriée ou que les pédales soient couplées à un système d'attache pour leur actionnement par de tels membres supérieurs (par exemple, au niveau des mains de l'utilisateur). Cette réalisation est en particulier avantageuse pour des utilisateurs à mobilité réduite au niveau des membres inférieurs.

Même si les modes de réalisation ci-après introduits présentent le cas d'un vélocipède à propulsion essentiellement humaine, un vélocipède comprenant en outre un moteur de propulsion d'appoint, par exemple un moteur électrique, n'est pas exclu dans le cadre de cette invention. La présence d'un tel moteur d'appoint est toutefois totalement optionnelle à la réalisation de l'invention.

Dans le cadre de ce document, tel qu'il est largement connu de l'homme du métier, le terme « pédalier » désigne un système mécanique de conversion et/ou transmission d'un mouvement (généralement rotatif, ou dans le cas de l'invention, en translation) exercé au niveau de pédales de ce pédalier en un mouvement de rotation d'une pièce mécanique, par exemple une roue dentée, tel qu'un plateau de bicyclette, qui est couplée mécaniquement, par exemple via une chaîne, à une roue du vélocipède.

Les pédales du pédalier selon l'invention ne sont pas limitées par une forme spécifique. Tout élément mécanique susceptible de servir de point d'application à une poussée exercée par un membre (en général, inférieur) de l'utilisateur peut constituer une « pédale » pour autant qu'il soit couplé mécaniquement au reste du pédalier de façon appropriée pour exercer sa fonction.

De préférence, chaque pédale du pédalier comprend toutefois une surface d'appui pour un segment distal du membre (en général, un pied) texturée et/ou rembourrée pour plus de confort de l'utilisateur. Les pédales sont de préférence munies chacune d'un bord latéral et/ou d'une portion souple et/ou arquée et/ou réglable en longueur surmontant une surface d'appui pour le segment distal qui sont destinés à faciliter le maintien en position de ce segment distal. Il s'agit par exemple d'un cale-pied. Ainsi, il est plus facile d'exercer le mouvement actif susdit de retour en position des pédales. Un gain de temps additionnel pour effectuer ce mouvement, et donc un meilleur rendement du vélocipède, s'ensuivent.

Dans le cadre du présent document, le terme « translation » est utilisé pour désigner un mouvement par glissement rectiligne. En particulier, le mouvement se fait sans rotation, sans retournement et sans déformation.

Une mobilité en translation d'une pédale correspond donc au fait qu'elle peut se déplacer le long d'une ligne droite, selon deux sens opposés (par exemple, du « haut vers le bas » et du « bas vers le haut »). De préférence, en fonctionnement normal du pédalier, les pédales ne sont mobiles qu'en translation. Le mouvement exercé sur les pédales du pédalier est typiquement un mouvement de va-et-vient le long de cette ligne droite.

Dans le cadre du présent document, un « couplage mécanique » entre deux pièces fait référence à une interaction entre ces pièces dans leur position l'une par rapport à l'autre. En d'autres termes, pour deux pièces couplées mécaniquement, au moins un mouvement (éventuellement dans une direction et un sens définis) d'une des pièces va engendrer un mouvement de l'autre des pièces, de telle sorte qu'elles maintiennent une position fixe l'une par rapport à l'autre. Un tel couplage mécanique n'implique bien sûr pas l'absence de mouvement relatif possible entre ces pièces. Un tel couplage peut être réalisé via un contact mécanique direct ou indirect entre ces pièces. Un « découplage mécanique » représente logiquement, dans le cadre de l'invention, une absence de couplage mécanique.

En particulier, le découplage mécanique des pédales du pédalier correspond à indépendance mécanique des pédales l'une par rapport à l'autre, et notamment du mouvement en translation des pédales l'une par rapport à l'autre, celui-ci étant typiquement le seul mouvement naturellement envisagé pour les pédales lorsque le pédalier est utilisé. En bref, les pédales sont « découplées mécaniquement » en ce que le mouvement en translation d'une des pédales n'interagit pas avec le mouvement en translation de l'autre des pédales.

L'usage, dans ce document, du verbe « comprenant », « muni », « équipé », de leurs variantes, ainsi que leurs conjugaisons, ne peut en aucune façon exclure la présence d'éléments autres que ceux mentionnés. L'usage, dans ce document, de l'article indéfini « un », « une », ou de l'article défini « le », « la » ou « l' », pour introduire un élément n'exclut pas la présence d'une pluralité de ces éléments.

Selon la présente invention, chacune des pédales est couplée mécaniquement à une roue dentée par l'intermédiaire d'un câble fixé à la pédale, de telle sorte qu'un mouvement en translation des pédales entraîne la roue dentée en rotation. La fixation de la pédale au câble peut se faire de façon simple par une ou plusieurs attaches, éventuellement par l'intermédiaire d'une pièce fixée entre la pédale et le câble.

La roue dentée est une pièce typique d'un engrenage utilisée pour la mise en mouvement d'un vélocipède tel qu'il est connu d'un homme du métier. Elle est de préférence destinée à être couplée mécaniquement à au moins une roue de support du vélocipède pour l'entraîner en rotation. Ce dernier couplage peut être réalisé soit directement à partir de la roue dentée, auquel cas la roue dentée joue le rôle de plateau, soit à partir d'une autre pièce mécanique du pédalier jouant ce rôle et elle-même couplée mécaniquement à la roue dentée.

La mention d'« une » roue dentée n'exclut par ailleurs pas la présence de plusieurs telles roues dentées alignées côte à côte au sein du pédalier, la roue qui est couplée avec la pédale étant sélectionnable via un dérailleur tel qu'il est bien connu de l'homme du métier.

Le couplage mécanique de la roue dentée avec la pédale peut également se faire de façon directe au moyen du seul câble, ou indirecte, via d'autres éléments mécaniques.

De préférence, le câble comprend une section supportant ou constituant une chaîne d'entraînement, cette dernière s'engrenant dans la roue dentée. La section s'étend seulement sur une partie d'une longueur totale du câble, de préférence moins de 50%, et plus préférentiellement, moins de 30%, par exemple, environ 25%. Il n'est en particulier pas nécessaire de pourvoir toute la longueur de câble d'une telle chaîne d'entraînement.

L'utilisation d'un câble, notamment selon la réalisation préférée susdite, est avantageux car il est généralement plus léger, facile à manipuler et moins couteux qu'une chaîne de transmission. Comme le mouvement des pédales se fait en translation dans le cadre de la présente invention, le couplage mécanique des pédales avec le reste du pédalier est susceptible de nécessiter une plus grande longueur de chaîne qu'un vélocipède traditionnel où les pédales sont en rotation. L'utilisation d'un câble est donc particulièrement avantageuse à cet effet.

Le câble est par exemple un câble constitué de fils métalliques et/ou fibres de matériau synthétique. Comme le comprendra aisément l'homme du métier, le câble doit être résistant aux tractions et pouvoir se plier, par exemple, de façon à former un cycle fermé à partir d'une pédale. Le terme « câble » n'est en outre pas à interpréter restrictivement à cet égard, toute forme d'élément linaire flexible qui soit équivalent pour cet usage pouvant être utilisé comme câble dans le cadre de la présente invention.

Bien que, selon une réalisation, une section du câble supporte ou constitue une chaîne d'entraînement, le cas d'un câble qui soit homogène sur sa longueur, et sans chaîne, ne se départit pas du cadre de l'invention. Un tel câble présente l'avantage d'éviter l'utilisation d'une chaîne de transmission au sein du pédalier et donc de simplifier ce dernier. Dans un tel cas, comme décrit au regard de la figure 4 ci-après introduite, la roue dentée peut être couplée mécaniquement à la pédale via un axe supportant un tambour autour duquel s'enroule le câble.

Dans le cadre de ce document, une courroie crantée peut aussi être utilisée à la place de la chaîne d'entraînement susdite, de façon équivalente.

De préférence, le câble est supporté par au moins une poulie et se présente sous forme d'un cycle fermé à partir de la pédale entourant au moins en partie la poulie. La poulie est par exemple disposée au niveau d'une extrémité de parcours rectiligne de la pédale. La roue dentée ou un autre élément de guidage, tel qu'une autre poulie, peut alors être agencé à l'autre extrémité de parcours de la pédale, de sorte que le câble entoure aussi au moins en partie la roue dentée ou cet autre élément de guidage. La poulie présente l'avantage de faciliter le guidage du câble et son mouvement lorsque le mouvement en translation de la pédale est effectué. Elle contribue également à supporter le pédalier, notamment le câble, et de façon plus générale, à la rigidité du pédalier en position.

Le cycle fermé formé par le câble à partir de la pédale permet une mise en œuvre simple et efficace du pédalage en translation susmentionné sous la forme d'un mouvement de va-et-vient, typiquement le long d'une partie du cycle fermé. Ce cycle peut être réalisé de diverses façons, par exemple en attachant chacune de deux extrémités opposés de la pédale selon sa direction de mouvement, respectivement à deux extrémités du câble, ou par exemple en utilisant un câble formant une boucle fermé auquel est fixé la pédale en un point d'attache, éventuellement par l'intermédiaire d'une pièce fixée entre la pédale et le câble. Selon l'invention :
- la roue dentée est couplée mécaniquement à un élément mécanique agencé pour fonctionner en roue libre, de telle sorte qu'un mouvement en rotation de l'élément mécanique entraîne la roue dentée en rotation, l'élément mécanique étant couplé mécaniquement à une des pédales, de sorte qu'un mouvement en translation de cette pédale entraîne l'élément mécanique en rotation.

Selon l'invention il existe donc un fonctionnement en roue libre de l'élément mécanique agencé entre la roue dentée et la pédale. Celui-ci permet, d'une part, d'entraîner en rotation dans un sens la roue dentée ou l'élément mécanique (et donc aussi la roue dentée) et de transmettre une force de poussée exercée par un utilisateur sur la pédale dans un sens de la direction du mouvement de translation (par exemple, « vers le bas »). Le fonctionnement en roue libre (par exemple, via un cliquetis) permet aussi, d'autre part, d'entraîner en rotation dans l'autre sens la roue dentée ou l'élément mécanique sans résistance, sans transmettre de force, lorsque l'utilisateur déplace la pédale dans l'autre sens selon la direction du mouvement de translation (par exemple, « vers le haut »), i.e. lors du retour en position de la pédale.

Le fonctionnement en roue libre et sa mise en œuvre sont bien connus d'un homme du métier et ne sont pas décrits en détails dans le cadre de ce document. Ils permettent en particulier la mise en œuvre simple et pratique d'un pédalage en translation.

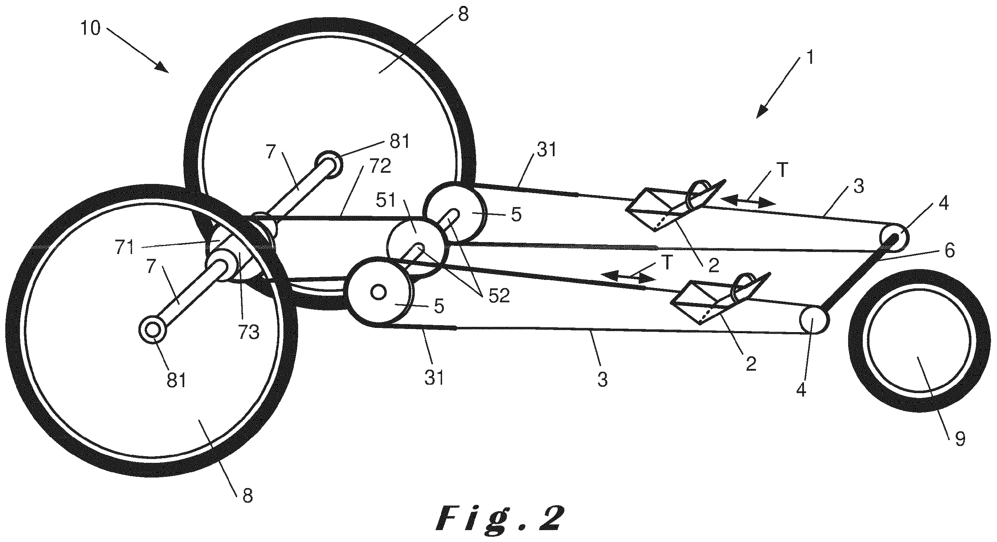

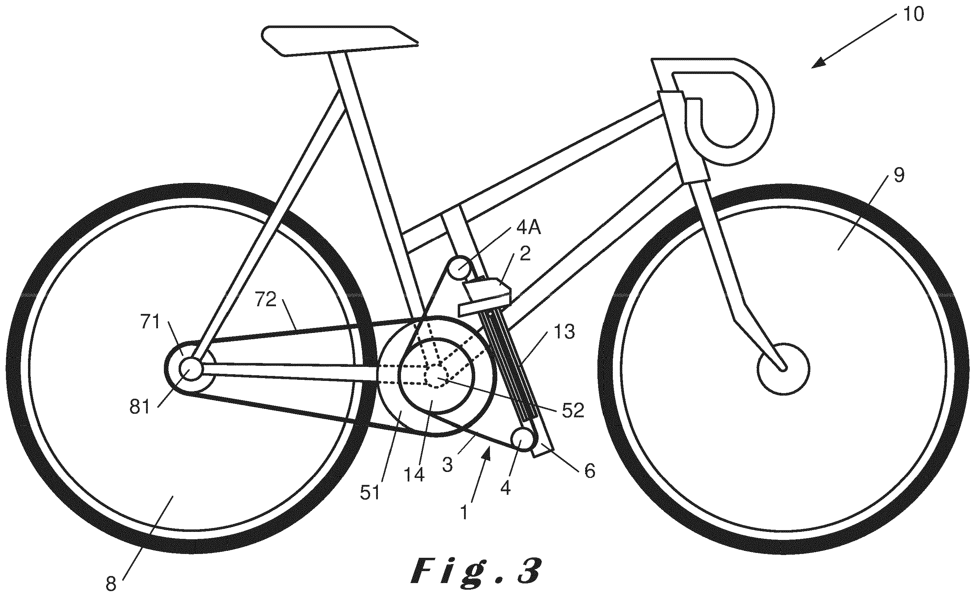

Le mode de réalisation susdit propose avantageusement que la roue dentée ne soit pas nécessairement elle-même en roue libre, cette fonction pouvant être implémentée au moyen de l'élément mécanique. Ce dernier constitue un élément intermédiaire pour la transmission du vélocipède. Il est en particulier utile lorsque plusieurs roues du vélocipède sont à entraîner par la même roue dentée (cas du mode de réalisation de la figure 2 ci-après introduite) et/ou lorsque la direction du mouvement de translation ou le type de vélocipède ne permettent pas d'agencer de façon appropriée ou aisée la roue dentée dans l'alignement de cette direction (cas du mode de réalisation de la figure 3 ci-après introduite).

Afin de ne pas complexifier inutilement le pédalier, le découplage mécanique des pédales induit naturellement un couplage mécanique de l'élément mécanique à une seule des pédales. Toutefois, comme cet élément mécanique fonctionne en roue libre, la roue dentée (ou un bloc éventuel de roues dentées successives pour définir plusieurs vitesses du vélocipède) à laquelle il est couplé est de préférence unique. Elle joue typiquement un rôle connu de plateau (ou de blocs de plateaux) du vélocipède agencé entre deux éléments mécaniques tels que susdits, chacun couplé à une seule des pédales. L'élément mécanique est de préférence monté sur un axe solidaire de la roue dentée pour entraîner cette dernière en rotation. Cet agencement est en outre particulièrement efficace et aisé à implémenter aux fins susmentionnées.

Selon une première réalisation, non revendiquée, la roue dentée est agencée pour fonctionner en roue libre inversée par rapport à l'élément mécanique, ce dernier constituant une autre roue dentée. Cette réalisation est notamment avantageuse dans la mise en œuvre d'un vélocipède comprenant plusieurs roues à entrainer par le pédalier (comme sur le mode de réalisation de la figure 2 ci-après introduite).

Selon l'invention, l'élément mécanique constitue un tambour autour duquel est enroulé une partie du câble, le tambour comprenant un point de fixation du câble. Le câble est alors de préférence supporté par deux poulies et se présente sous une forme d'un cycle triangulaire entourant au moins partiellement chacune des poulies, la pédale étant mobile en translation entre les deux poulies.

Cette configuration est en particulier avantageuse pour mettre en œuvre une bicyclette. En effet, dans ce cas, la direction de mouvement en translation est au mieux oblique, voire presque verticale (i.e. essentiellement perpendiculaire à une droite joignant les moyeux des deux roues) de sorte que l'espace disponible pour agencer l'élément mécanique et son couplage mécanique avec la roue dentée est restreint sous la selle de la bicyclette. Il est donc nécessaire de modifier le cadre du vélocipède pour disposer différemment le pédalier ou d'accroître la hauteur de la selle. Ces modifications sont sources de difficultés techniques et susceptibles de ne pas permettre à l'utilisateur de la bicyclette de rendre son pédalage plus agréable et/ou de ne pas lui permettre de poser aisément un pied au sol en cas de besoin, ce qui n'est pas souhaitable.

Avantageusement, les poulies permettent d'agencer la pédale au niveau de la bicyclette de façon adéquate pour surmonter ces difficultés. Elles permettent de déporter latéralement le tambour par rapport au mouvement en translation et de faciliter en conséquence son couplage mécanique avec la roue dentée jouant le rôle de plateau, par exemple via un axe mécanique comme il est décrit ci-avant.

Ce pédalier peut être intégré facilement à une bicyclette traditionnelle par le remplacement du pédalier, sans modifier le cadre et l'architecture de la bicyclette, ce qui représente un gain en temps dans le déploiement à large échelle de cette invention à frais minimes. En particulier, un tel remplacement peut même se faire en conservant le plateau existant sur la bicyclette et en l'utilisant comme la roue dentée susdite à laquelle est couplée mécaniquement le tambour.

L'utilisation d'un tambour est quant à elle avantageuse car elle ne nécessite pas de chaîne d'entraînement et est donc particulièrement simple. En particulier, lorsque la pédale est mue en translation dans un sens (« vers le bas » ou « vers le haut » par exemple), elle entraîne le câble auquel elle est fixée, ce dernier se déroulant du tambour à partir d'un côté tandis qu'il s'enroule autour du tambour à partir de l'autre côté. Le câble fait de préférence plusieurs tours autour du tambour.

L'homme du métier comprendra que le nombre de tours du câble autour du tambour est fonction du diamètre du tambour et de la longueur de mouvement rectiligne souhaitée à parcourir par la pédale. Le point de fixation permet de limiter ce mouvement de façon simple et appropriée tout en rendant le câble solidaire du tambour. Le câble s'étend typiquement de part et d'autre du point de fixation. De cette façon, son enroulement et son déroulement autour du tambour sont rendus possibles sans patiner.

Selon un mode de réalisation de l'invention compatible avec les réalisations précédentes, chaque pédale est agencée sur une glissière. Cet agencement est tel que le mouvement en translation de la pédale correspond à un glissement d'un chariot de la glissière sur un rail de celle-ci.

Dans le cadre de ce document, tel qu'il est connu d'un homme du métier, une « glissière » correspond à une pièce mécanique permettant un mouvement de glissement rectiligne, et comprenant deux parties : un rail et un chariot mobile par des roulements s'insérant dans le rail. Les termes « rail » et « chariot » sont à interpréter au sens mécanique du terme. Les roulements sont substituables à une coulisse par exemple.

La glissière de ce mode de réalisation permet de mettre en œuvre de façon simple et pratique le mouvement en translation de la pédale. En particulier, celle-ci est de préférence solidarisée au chariot de la glissière, de sorte que la glissière permette de guider la trajectoire rectiligne de la pédale, mais aussi de protéger et de maintenir en place les éléments mécaniques du pédalier y afférant. La glissière peut en particulier est positionnée et solidarisée de façon simple et solide au niveau du cadre du vélocipède par son rail.

Plusieurs réalisations sont envisagées. Dans une première telle réalisation, la pédale est agencée entre deux rails parallèles et solidarisée de part et d'autre à deux roulettes chacune positionnée sur un des rails. Le mouvement en translation de la pédale se fait alors entre les deux rails. La pédale peut aussi être solidarisée à deux autres roulettes décalées (par exemple, en arrière selon la trajectoire aller ou « vers le bas » de la pédale) par rapport aux deux premières agencées sous le rail. Ceci permet d'accroître l'adhérence de la pédale solidarisée aux roues sur les rails, et donc une meilleure stabilité du pédalier. Lorsque le pédalier comprend un câble associé à chaque pédale comme décrit ci-avant, une partie du câble s'étend parallèlement aux deux rails, entre ceux-ci.

Dans une deuxième réalisation, la pédale est solidarisée à un (petit) chariot comprenant au moins deux, et de préférence quatre, roulettes agencées dans un rail unique présentant une forme d'étui muni d'une fente. Une liaison mécanique sous forme de tige, par exemple une équerre, fixe la pédale au chariot en passant par la fente, en permettant à l'ensemble du chariot, de la liaison et de la pédale de se mouvoir en translation parallèlement au rail.

Dans la deuxième réalisation, et généralement selon les réalisations pour lesquels une glissière et un câble sont associés à chaque pédale comme décrits ci-avant, une partie du câble est préférentiellement agencée dans la glissière et s'étend entre deux extrémités de celle-ci. En particulier, le rail de la glissière guide avantageusement le câble et la pédale, en protégeant les éléments mécaniques associés à ceux-ci comme représenté en figure 4 ci-après introduite.

Dans les modes de réalisations présentés, les pièces mécaniques telles que le câble, la chaîne d'entrainement, les poulies, l'élément mécanique et la glissière appartiennent au pédalier selon l'invention et sont de préférence associées à une seule des pédales. La roue dentée appartient au pédalier, joue le rôle de plateau comme décrit ci-dessus (ou de bloc de plateaux si plusieurs telles roues dentées sont prévues côte à côte pour définir plusieurs vitesses) lequel peut être unique pour les deux pédales comme c'est le cas pour les modes de réalisation illustrés aux figures 2 et 3 ci-après introduites.

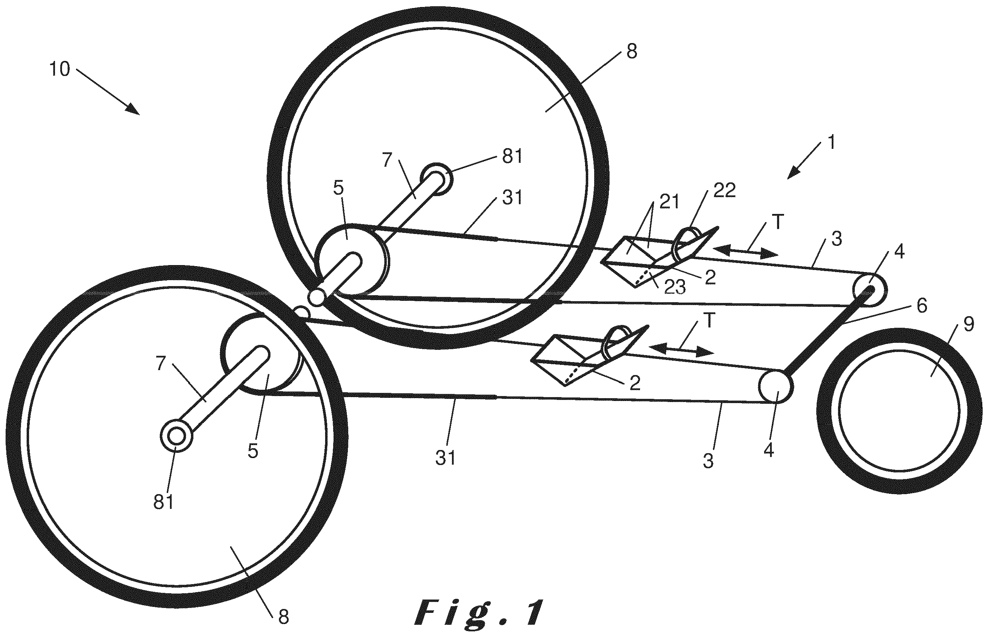

**Il** existe toutefois des modes de réalisation, tel que celui illustré au regard de la figure 1 ci-après introduite, pour lesquels chacune des pédales est associée à une roue dentée distincte. Ceci constitue en outre une façon très simple de mettre en œuvre le découplage mécanique des pédales.

Les modes de réalisations avec une (ou plusieurs) roues dentées jouant le rôle d'un unique plateau (ou bloc de plateaux) connus d'un vélocipède classique ont toutefois l'avantage de pouvoir être mis en place facilement sur un vélocipède en conservant son plateau, car seules les autres pièces mécaniques du pédalier sont à substituer par celles selon cette invention. Par exemple, pour une bicyclette traditionnelle, le reste du mécanisme de transmission qui est couplé au pédalier (i.e. une chaîne de transmission s'engrenant dans la roue dentée et dans un pignon couplé mécaniquement à un moyeu d'une roue de support arrière doté d'un dérailleur éventuel) peut être conservé. Le pédalier selon l'invention est donc facile à intégrer à un vélocipède traditionnel sans nécessiter de modifier celui-ci en profondeur.

L'invention propose donc aussi logiquement un vélocipède muni du pédalier selon la présente invention. Les modes de réalisation et les avantages du pédalier de l'invention se transposent *mutatis mutandis* au présent vélocipède.

En particulier, le vélocipède permet de se déplacer par propulsion humaine de façon plus agréable, rapide et efficace que la bicyclette traditionnelle.

Le vélocipède comprend typiquement une roue de support arrière, une roue de support avant, et un pédalier selon l'invention couplé mécaniquement à la roue de support arrière, de sorte qu'un mouvement en translation des pédales entraîne la roue de support arrière en rotation. En d'autres termes, le pédalier est agencé pour entraîner la roue de support arrière en rotation.

De préférence, pour un pédalier muni d'un câble couplé à une roue dentée tel qu'il est introduit ci-avant, la roue dentée est couplée mécaniquement à la roue de support arrière, de telle sorte qu'un mouvement en rotation de la roue dentée entraîne la roue de support arrière en rotation. Dans ce cas, et de préférence, une chaîne de transmission s'engrène dans la roue dentée et dans un pignon couplé mécaniquement à un moyeu de la roue de support arrière. Comme décrit ci-avant, ces éléments du mécanisme de transmission sont connus d'un vélocipède usuel et le pédalier selon l'invention permet avantageusement d'être couplé simplement et efficacement avec ce mécanisme sans devoir le modifier ou changer le reste de l'architecture du vélocipède.

Selon un mode de réalisation du vélocipède selon l'invention correspondant à une bicyclette, par exemple illustré en figure 3 ci-après introduite, le mouvement en translation des pédales se fait selon une direction formant un plus petit angle compris entre 60 et 90°, de préférence entre 70° et 80°, par exemple, 70, 75° ou 80°, avec une direction passant par le moyeu de la roue de support arrière et un moyeu de la roue de support avant. Les jambes de l'utilisateur sont agencées de façon assez semblable à une bicyclette traditionnelle, seul leur mouvement étant distinct, s'agissant d'un mouvement en translation de va et vient, typiquement du « haut vers le bas » et du « bas vers le haut » comme décrit ci-avant.

Le pédalier est de préférence configuré de telle sorte que ce soit la poussée de l'utilisateur « vers le bas » qui induit une rotation de la roue dentée, tandis que le mouvement de retour « vers le haut » n'induit pas de rotation inverse de la roue dentée grâce à un mécanisme de fonctionnement en roue libre (de la roue dentée ou de l'élément mécanique interposé entre chaque pédale et la roue dentée) ainsi qu'il est décrit en détail ci-avant. De façon avantageuse, l'utilisateur transmet de façon aisée une force au mécanisme du pédalier et de transmission car il est aisé de pousser la pédale « vers le bas ». En outre, cette force peut être doublée dans le cadre de l'invention vu que les pédales sont découplées mécaniquement.

Selon un mode de réalisation du vélocipède correspondant par exemple à un tricycle ou un quadricycle, par exemple illustré en figure 2 ci-après introduite, le vélocipède comprend deux roues de support arrière et un essieu s'étendant entre les moyeux de celles-ci. Le pignon est préférentiellement monté sur un différentiel agencé au niveau de l'essieu. Le différentiel permet avantageusement aux roues de support arrière de tourner à des vitesses de rotation différentes, par exemple lorsque le vélocipède aborde un tournant.

Lorsque le vélocipède est un tricycle, tel qu'il est connu, les roues de support sont de préférence agencées selon un triangle isocèle, la roue de support avant étant centrale comme dans les figures 1 et 2 ci-après introduites. L'invention peut également être appliquée à des tricycles ayant une roue arrière motrice et deux roues avant directrices ainsi qu'à des bicyclettes en position couchée. Dans ces deux derniers cas, le pédalier est une variante de la figure 4 ci-après introduite, la glissière se rapprochant d'une direction horizontale.

Le mouvement en translation des pédales se fait selon une direction faisant un angle de préférence d'au plus 15° avec une direction perpendiculaire à l'essieu passant par un moyeu de la roue de support avant. La direction du mouvement de translation est donc approximativement parallèle à celle qui passe par le moyeu de la roue de support avant et est perpendiculaire à l'essieu arrière. Elle est donc aussi parallèle à l'orientation globale du vélocipède et à la direction selon laquelle il se déplace. Les câbles auxquels sont fixés les pédales le cas échéant sont alors agencé selon cette même direction, tout comme les éventuelles glissières.

Le pédalage en translation avec un tel tricycle est plus agréable qu'avec un tricycle traditionnel, notamment compte tenu de la position étendue des jambes de l'utilisateur, son torse pouvant rester droit, perpendiculaire à la direction. Cette position du corps de l'utilisateur est tout à fait adaptée pour effectuer un pédalage en translation tout en ayant une bonne vision de la trajectoire à parcourir par le tricycle. Le mouvement de translation est alors un mouvement « vers l'avant » et « vers l'arrière ».

Le pédalier est de préférence configuré de telle sorte que ce soit la poussée de l'utilisateur « vers l'avant » qui force la rotation (de l'axe de) la roue dentée, tandis que le mouvement de retour « vers l'arrière » n'induit qu'une rotation « à vide » de la roue dentée grâce à un mécanisme de fonctionnement en roue libre qui est décrit en détail ci-avant. De façon avantageuse, l'utilisateur transmet de façon aisée une force au mécanisme du pédalier et de transmission du tricycle car il est aisé pour lui de pousser la pédale « vers l'avant ». En outre, cette force peut être doublée dans le cadre de l'invention vu que les pédales sont découplées mécaniquement.

Bien que le pédalage en translation soit généralement et préférentiellement effectué au moyen des membres inférieurs de l'utilisateur, dans le cas du tricycle présenté ci-dessus, il peut également être mis en œuvre au moyen des membres supérieurs de l'utilisateur. En effet, il suffit pour cela facilement d'ajuster la hauteur des pédales, câbles, poulies et/ou glissière éventuelle, de sorte que les pédales soient agencées pour être mises en mouvement de translation par des membres humains supérieurs.

Les avantages du pédalage agréable susmentionnés se transposent alors à ce tricycle, notamment car le pédalage ne sollicite pas les épaules de l'utilisateur contrairement aux dispositifs équivalents à pédalage en rotation. L'utilisateur peut garder le torse fixe et droit et mouvoir uniquement ses bras. Cette réalisation est très avantageuse pour les utilisateurs dont la mobilité des membres inférieurs est réduite ou inexistante.

### Brève description des figures

D'autres caractéristiques et avantages de la présente invention apparaîtront à la lecture de la description détaillée qui suit pour la compréhension de laquelle il sera fait référence aux figures annexées parmi lesquelles :
- la figure 1 illustre une vue schématique d'un tricycle muni d'un pédalier selon un premier mode de réalisation non revendiqué ;
- la figure 2 illustre une vue schématique d'un tricycle muni d'un pédalier selon un deuxième mode de réalisation non revendiqué ;
- la figure 3 illustre une vue schématique d'une bicyclette munie d'un pédalier selon l'invention :
- la figure 4 illustre une vue schématique d'une partie du pédalier de la figure 3.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris si ces numéros ou lettres sont indiqués dans les revendications.

### Description de modes de réalisation de l'invention

Cette partie présente une description de modes de réalisation préférés.

Les dessins et figures décrits ci-après sont schématiques non limitants. En particulier, les figures 1 et 2 ne comprennent évidemment pas tous les éléments mécaniques d'un vélocipède bien connus de l'homme du métier mais se limitent à représenter les éléments essentiels de celui-ci liés au fonctionnement du pédalier selon l'invention.

La figure 1 illustre partiellement un tricycle 10 muni d'un pédalier 1 selon un premier mode de réalisation non revendiqué. Le pédalier 1 comprend deux pédales 2 mobiles en translation T selon une direction « horizontale » de façon découplée mécaniquement l'une de l'autre. Le tricycle 10 a deux roues de support arrière 8 et une roue de support avant 9 agencée centralement par rapport aux deux roues de support arrière 8 tel qu'il est connu d'un tricycle classique. Toutefois, les deux roues de support arrière 8 ne sont pas fixées directement sur un même essieu, mais à des portions d'essieux 7 distinctes s'étendant chacune entre un moyeu 81 d'une roue de support arrière 8, éventuellement muni d'un dérailleur.

Chaque portion d'essieu 7 est couplée axialement et de façon mécanique à une roue dentée 5 apte à fonctionner en roue libre. Chacune des roues dentées 5 est couplée mécaniquement de façon directe à une des pédales via un câble 3 qui comprend, sur une section par exemple d'environ 30% de sa longueur totale, une chaîne d'entrainement 31 s'engrenant avec la roue dentée 5. De façon alternative, cette réalisation peut être définie comme une chaîne d'entrainement 31 libre aux extrémités de laquelle est attaché un câble en cycle fermé. Une poulie 4 guide et supporte le câble 3 en cycle fermé.

En particulier, le câble 3 s'étend, d'une part, sur un segment horizontal, de la roue dentée 5 jusqu'à la poulie 4 et, d'autre part, sur un autre segment horizontal opposé au premier, de la poulie 4 jusqu'à la roue dentée 5. Le câble entoure en partie la poulie 4, cette dernière permettant de ramener la chaîne d'entrainement 31 en position au niveau de la roue dentée 5 par un mouvement de translation T du câble. Ce mouvement de translation est induit par une des pédales 2 fixée au câble de sorte qu'un mouvement en translation T de la pédale 2 « vers l'avant », i.e. de la roue dentée 5 vers la poulie 4, force l'axe 7 de la roue dentée 5 en rotation. Un mouvement en translation T de la pédale 2 dans l'autre sens, i.e. « vers l'arrière », de la poulie 4 vers la roue dentée 5, aura pour effet d'induire une rotation « à vide » de la roue dentée 5 vu que celle-ci fonctionne en roue libre.

Bien que cela ne soit pas représenté en figures 1 et 2, chaque pédale 2 peut être guidée en translation T au moyen d'une glissière telle que décrite dans l'exposé de l'invention.

Chaque côté latéral du pédalier 1 de part et d'autre de la direction définie par le mouvement de translation T, et plus généralement du mécanisme illustré pour le tricycle 10, est indépendant et découplé mécaniquement de l'autre. Ainsi, une des roues de support arrière 8 peut être mise en rotation de façon indépendante de l'autre en déplaçant la pédale 2 correspondante. Cette réalisation est donc très simple à mettre en œuvre et procure un pédalage agréable à haut rendement.

Divers éléments de structure 6 et un cadre ou châssis du tricycle 10 (tel que l'élément de maintien des poulies 4 en figures 1 et 2) ne sont pas nécessairement représentés. Ils sont toutefois évidemment prévus pour maintenir les pièces du tricycle 10 ensemble comme le comprendra l'homme du métier.

La figure 2 illustre partiellement un tricycle 10 muni d'un pédalier 1 selon un deuxième mode de réalisation non revendiqué La différence avec le premier mode de réalisation est que les deux roues dentées 5 ne sont plus couplées directement chacune à une des roues arrières de support 8, mais sont montées sur un même axe 52 de part et d'autre d'une autre roue dentée 51 (ou groupe de roues dentées) agencée pour fonctionner en roue libre inversée par rapport aux roues dentées 5. Cette autre roue dentée 51 joue un rôle analogue à celui d'un plateau d'un vélocipède traditionnel, alors que les roues dentées 5 jouent le rôle d'éléments mécaniques intermédiaires comme décrit dans l'exposé de l'invention.

Le principe du pédalage est le même selon les deux modes de réalisations. C'est la transmission du mouvement de rotation des roues dentées 5 aux roues de support arrière 8 qui se fait distinctement. Le mouvement de translation T des pédales 2 « vers l'avant » consécutif à une poussée entraîne les roues dentées 5 en rotation. Comme elles sont couplées mécaniquement à l'autre roue dentée 51 agencée centralement via l'axe 52, elles communiquent aussi un mouvement de rotation à cette dernière, avec deux fois plus de puissance si les deux pédales 2 sont en mouvement « vers l'avant » en même temps.

Un mouvement en translation T des pédales 2 dans l'autre sens, « vers l'arrière », pour leur retour en position d'application de la poussée susdite, aura pour effet de ne pas induire de rotation de la roue dentée 51 vu que les deux roues dentées 5 fonctionnent en roue libre.

Dans ce deuxième mode de réalisation, la transmission d'énergie entre les pédales 2 et les roues de support arrière 8 se fait donc via cette autre roue dentée 51, par une chaîne de transmission 72 s'engrenant sur un pignon 71 agencé sur un essieu 7 des deux roues en question, de façon tout à fait standard. Il est prévu de monter le pignon 71 sur un différentiel 73 agencé au centre de l'essieu afin de permettre aux roues de support arrière 8 de tourner à des vitesses différentes, ce qui est notamment utile lorsque le tricycle aborde un tournant.

Comme illustré en figure 1, les pédales 2 du pédalier 1 selon l'invention sont de préférence chacune munie d'une surface d'appui 23 prévue pour accueillir un pied de l'utilisateur. Cette surface d'appui 23 peut être texturée et/ou rembourrée pour plus de confort. Un bord latéral 21 et/ou une talonnière de la pédale 2 est de préférence prévue pour stabiliser adéquatement le pied et faciliter le mouvement de retour des pédales 2 de la poulie vers la roue dentée 5. Une portion souple et réglable 22 surmontant la surface d'appui 23, par exemple une forme de ceinture ou d'élastique, est de préférence prévue pour attacher de façon plus stable le pied à la pédale 2 et permettre adéquatement la transmission de la force de l'utilisateur sur la pédale 2 au reste du pédalier 1.

La figure 3 illustre un mode de réalisation préféré de la présente invention. Il s'agit d'une bicyclette 10 à laquelle a été incorporé le pédalier 1 comprenant deux pédales 2 mobiles de façon découplée mécaniquement selon l'invention. La figure 4 représente une vue plus détaillée agrandie d'une moitié latérale 1A du pédalier 1 agencée d'un côté de la bicyclette. L'agencement du pédalier 1 sur le côté latéral opposé est typiquement semblable (« en miroir »), comme il sera compris facilement de l'homme du métier.

Semblablement au deuxième mode de réalisation, la roue de support arrière 8 de la bicyclette est entraînée en rotation par un couplage mécanique avec une roue dentée 51 effectué au moyen d'une chaîne de transmission 72 s'engrenant à la fois dans cette roue dentée 51 et dans un pignon 71 qui est agencé au niveau du moyeu 81 de la roue de support arrière 8. Tel qu'il est connu, un dérailleur peut être prévu à cet emplacement ou un changement de vitesse peut être inclus dans le moyeu 81.

La roue dentée 51 est entraînée en rotation par son couplage mécanique avec deux exemplaires semblables des pièces illustrées en figure 4, agencés de chaque côté de la bicyclette 10. Plus précisément, la roue dentée 51 est agencée sur un axe 52 sur lequel est monté, de part et d'autre de la roue dentée 51, deux tambours 14 configurés pour fonctionner en roues libres, de façon à transmettre un mouvement de rotation à la roue dentée 51 via l'axe 52 uniquement lorsqu'ils tournent dans un sens associé à une poussée « vers le bas » des pédales 2 de la bicyclette 10.

Chaque tambour 14 accueille un câble 3 qui est guidé via deux poulies 4, 4A dans un rail 13 de glissière, de sorte qu'il traverse le rail 13 entre deux extrémités 13A opposées de celui-ci agencées respectivement à proximité d'une des poulies 4, 4A. Le câble 3 suit en particulier un cycle triangulaire entre les sommets définis par le tambour 14 et les poulies 4, 4A. Le câble 3 est attaché au tambour 14 en un point de fixation 32 et fait plusieurs tours autour du tambour 14 de façon à pouvoir se dérouler et s'enrouler autour de celui-ci.

Le câble 3 est également attaché à un chariot 11 de la glissière comprenant des roulements 11A à billes agencés dans le rail 13, de telle sorte que le chariot 11 peut se déplacer parallèlement au rail, sur celui-ci. Le chariot 11 comprend ou est fixé à un corps 12 incluant un segment extrémal auquel est attaché le câble 3 et un autre segment extrémal opposé auquel est attaché une des pédales 2 tel qu'illustré en figure 4. La forme en équerre permet de déporter la pédale 2 hors de la trajectoire du chariot et de faciliter le pédalage. Une fente 13B est prévue sur le rail 13 selon la direction de translation T pour permettre le passage d'une branche du corps 12 hors du rail 13 à tout endroit du rail 13.

Un mouvement en translation T de la pédale 2 correspond à un mouvement du chariot 11 sur le rail 13, et donc à un déplacement du câble 3. Quand la pédale 2 est poussée « vers le bas », i.e. de la poulie 4A vers la poulie 4, le câble issu de la poulie 4A se déroule du tambour 14 et est orienté vers la poulie 4A, et le câble issu de la poulie 4 s'enroule autour du tambour 14. Le mouvement de rotation du tambour 14 est transmis à la roue dentée 51, entraînant ainsi la roue de support arrière 8 de la bicyclette 10 en rotation. Lorsque la pédale 2 est tirée « vers le haut » pour revenir au point de départ d'application de la poussée, i.e. de la poulie 4 vers la poulie 4A, le mouvement inverse se produit mais le tambour fonctionnant en roue libre ne transmet aucune force à la roue dentée 51. Ceci permet en outre de tirer la pédale 2 sans effort ni résistance, donc rapidement, et donc d'appliquer plus rapidement une nouvelle poussée vers le bas de la pédale 2.

Comme les deux pédales 2 sont mécaniquement indépendantes, le temps de retour en position d'une des pédales 2 ne dépend pas du temps pour pousser l'autre pédale 2 jusqu'à une position correspondant à une extrémité 13A du rail, et chaque pédale 2 peut revenir en position « vers le haut » en moins de temps que le temps nécessaire à sa poussée « vers le bas ». En outre, cette indépendance permet que d'exercer une poussée sur les deux pédales 2 en même temps (mais pas nécessairement simultanément) lors d'une utilisation de la bicyclette 10 selon l'invention, et donc de transmettre davantage de puissance à la roue dentée 51 en fonction du temps.

Le rail 13 de la glissière peut avantageusement être fixé sur un cadre de la bicyclette 10, par exemple par un assemblage mécanique quelconque ou par une fixation par soudure d'un axe 6 de support tel que représenté en figure 3, ou directement sur un axe déjà existant du cadre de la bicyclette 10. La poulie 4A est de préférence ancrée solidement au cadre ou à cet axe 6 car elle subit davantage les forces de poussée que la poulie 4 qui subit peu de contraintes. Comme pour les autres modes de réalisation, les pièces usuelles de structure de la bicyclette 10 tels que le cadre, le guidon, la selle, etc. visibles en figure 3 ne sont pas détaillées présentement. Ces pièces sont bien connues de l'homme du métier.

La direction selon laquelle s'étend le rail 13 définit principalement la direction du mouvement en translation T. Elle forme de préférence un angle compris entre 60° et 90° avec la direction passant par le moyeu 81 de la roue de support arrière 8 et le moyeu de la roue de support avant 9, induisant un pédalage agréable et un maintien physique adéquat du corps de l'utilisateur de la bicyclette 10.

D'autres réalisations que celles illustrées sont possibles lesquelles peuvent être obtenues aisément par l'homme du métier. Par exemple, dans le cas d'une bicyclette couchée ou d'un tricycle à une seule roue arrière motrice, le rail 13, et donc la direction de translation T des pédales 2, s'approchera logiquement d'une direction horizontale. Dans ce cas, la poulie 4A peut éventuellement être omise, le câble 3 entrant directement dans le rail 13.

En résumé, la présente invention concerne un pédalier 1 pour vélocipède 10 comprenant deux pédales 2 mobiles en translation T découplées mécaniquement.

La présente invention a été décrite ci-dessus en relation avec des modes de réalisations spécifiques, qui ont une valeur purement illustrative et ne doivent pas être considérés comme limitatifs. Il apparaîtra directement pour l'homme du métier que l'invention n'est pas limitée aux exemples illustrés ou décrits ci-dessus, et que sa portée est plus largement définie par les revendications ci-après introduites.

## Revendications

1. Pédalier (1) pour vélocipède (10) muni de deux pédales (2) mobiles en translation (T) découplées mécaniquement l'une de l'autre,
dans lequel chacune des pédales (2) est couplée mécaniquement à une roue dentée (51) par l'intermédiaire d'un câble (3) fixé à la pédale (2), de sorte qu'un mouvement en translation (T) des pédales (2) entraîne la roue dentée (51) en rotation,
dans lequel la roue dentée (51) est couplée mécaniquement à un élément mécanique (14) agencé pour fonctionner en roue libre, de sorte qu'un mouvement en rotation de l'élément mécanique (14) entraîne la roue dentée (51) en rotation, et
dans lequel l'élément mécanique (14) est couplé mécaniquement à une des pédales (2) de sorte qu'un mouvement en translation (T) de cette pédale (2) entraîne l'élément mécanique (14) en rotation,
**caractérisé en ce que**
l'élément mécanique (14) constitue un tambour autour duquel est enroulé une partie du câble (3), le tambour comprenant un point de fixation (32) du câble (3).

2. Pédalier (1) selon la revendication 1, dans lequel l'élément mécanique (14) est monté sur un axe (52) solidaire de la roue dentée (51) pour entraîner cette dernière en rotation.

3. Pédalier (1) selon la revendication 1 ou 2, dans lequel le câble (3) est supporté par deux poulies (4, 4A) et se présente sous forme d'un cycle triangulaire entourant au moins partiellement chacune des poulies (4, 4A), la pédale (2) étant mobile en translation (T) entre les deux poulies (4, 4A).

4. Pédalier (1) selon l'une quelconque des revendications 1 à 3, dans lequel chaque pédale (2) est agencée sur une glissière (11, 13).

5. Pédalier (1) selon la revendication 4, dans lequel une partie du câble (3) est agencée dans la glissière (11, 13) et s'étend entre deux extrémités (13A) de celle-ci.

6. Vélocipède (10) comprenant une roue de support arrière (8), une roue de support avant (9), un pédalier (1) selon l'une des revendications 1 à 5 couplé mécaniquement à la roue de support arrière (8), de sorte qu'un mouvement en translation (T) des pédales (2) entraîne la roue de support arrière (8) en rotation, dans lequel la roue dentée (51) est couplée mécaniquement à la roue de support arrière (8), de sorte qu'un mouvement en rotation de la roue dentée (51) entraîne la roue de support arrière (8) en rotation.

7. Vélocipède (10) selon la revendication 6, comprenant une chaîne de transmission (72) s'engrenant dans la roue dentée (51) et dans un pignon (71) couplé mécaniquement à un moyeu (81) de la roue de support arrière (8).

8. Vélocipède (10) selon la revendication 6 ou 7, consistant en une bicyclette, et dans lequel le mouvement en translation (T) des pédales (2) se fait selon une direction formant un plus petit angle compris entre 60 et 90° avec une direction passant par le moyeu (81) de la roue de support arrière (8) et un moyeu de la roue de support avant (9).

## Patentansprüche

1. Pedalsystem (1) für ein Fahrrad (10) mit zwei Pedalen (2), die in Translation (T) beweglich und mechanisch voneinander entkoppelt sind,
wobei jedes der Pedale (2) mechanisch mit einem Zahnrad (51) gekoppelt ist, und zwar durch ein an dem Pedal (2) befestigtes Zugmittel (3), so dass eine translatorische Bewegung (T) der Pedale (2) das Zahnrad (51) in Rotation versetzt,
wobei das Zahnrad (51) mechanisch mit einem Freilaufelement (14) gekoppelt ist, so dass eine Rotationsbewegung des Freilaufelements (14) das Zahnrad (51) in Rotation versetzt, und
wobei das Freilaufelement (14) mechanisch mit einem der Pedale (2) gekoppelt ist, so dass eine translatorische Bewegung (T) dieses Pedals (2) das Freilaufelement (14) in Rotation versetzt,
**dadurch gekennzeichnet, dass**
das Freilaufelement (14) eine Trommel bildet, um die ein Abschnitt des Zugmittels (3) gewickelt ist, wobei die Trommel eine Befestigungsstelle (32) für das Zugmittel (3) aufweist.

2. Pedalsystem (1) nach Anspruch 1, wobei das Freilaufelement (14) auf einer Achse (52) angebracht ist, die mit dem Zahnrad (51) fest verbunden ist, um dieses in Rotation zu versetzen.

3. Pedalsystem (1) nach Anspruch 1 oder 2, wobei das Zugmittel (3) von zwei Umlenkrollen (4, 4A) geführt wird und als ein dreieckiger umlaufender Zug ausgebildet ist, der jede der Umlenkrollen (4, 4A) mindestens teilweise umgibt, wobei das Pedal (2) in Translation (T) zwischen den beiden Umlenkrollen (4, 4A) beweglich ist.

4. Pedalsystem (1) nach einem der Ansprüche 1 bis 3, wobei jedes Pedal (2) in einer Führungsschiene (11, 13) angeordnet ist.

5. Pedalsystem (1) nach Anspruch 4, wobei ein Abschnitt des Zugmittels (3) in der Führungsschiene (11, 13) verläuft und sich zwischen zwei Enden (13A) derselben erstreckt.

6. Fahrrad (10), umfassend ein Hinterrad (8), ein Vorderrad (9) und ein Pedalsystem (1) nach einem der Ansprüche 1 bis 5, das mechanisch mit dem Hinterrad (8) gekoppelt ist, so dass eine translatorische Bewegung (T) der Pedale (2) das Hinterrad (8) in Rotation versetzt, wobei das Zahnrad (51) mechanisch mit dem Hinterrad (8) gekoppelt ist, so dass eine Rotationsbewegung des Zahnrads (51) das Hinterrad (8) in Rotation versetzt.

7. Fahrrad (10) nach Anspruch 6, umfassend ein Getriebe (72), das in das Zahnrad (51) und in einen Zahnkranz (71) eingreift, der mechanisch mit einer Nabe (81) des Hinterrads (8) gekoppelt ist.

8. Fahrrad (10) nach Anspruch 6 oder 7, **dadurch gekennzeichnet, dass** es sich um ein Zweirad handelt, und wobei sich die translatorische Bewegung (T) der Pedale (2) in einer Richtung vollzieht, die mit einer Verbindungslinie zwischen der Nabe (81) des Hinterrads (8) und einer Nabe des Vorderrads (9) einen kleineren Winkel im Bereich von 60 bis 90° bildet.

## Claims

1. A chainset (1) for a velocipede (10) equipped with two pedals (2) which are mobile in translation (T) mechanically decoupled from each other,
wherein each of the pedals (2) is mechanically coupled to a toothed wheel (51) by means of a cable (3) secured to the pedal (2), so that a translational movement (T) of the pedals (2) causes the toothed wheel (51) to rotate, wherein the toothed wheel (51) is mechanically coupled to a mechanical element (14) arranged to operate in freewheel mode, so that a rotational movement of the mechanical element (14) drives the toothed wheel (51) in rotation, and
wherein the mechanical element (14) is mechanically coupled to one of the pedals (2), so that a translational movement (T) of this pedal (2) drives the mechanical element (14) in rotation,
**characterized in that**
the mechanical element (14) constitutes a drum around which a part of the cable (3) is wound, the drum comprising a fixing point (32) of the cable (3).

2. The chainset (1) according to claim 1, wherein the mechanical element (14) is mounted on an axle (52) secured to the toothed wheel (51) to drive the latter in rotation.

3. The chainset (1) according to claim 1 or 2, wherein the cable (3) is supported by two pulleys (4, 4A) and is in the form of a triangular cycle at least partially surrounding each of the pulleys (4, 4A), the pedal (2) being able to move in translation (T) between the two pulleys (4, 4A).

4. The chainset (1) according to any one of claims 1 to 3, wherein each pedal (2) is arranged on a slide (11, 13).

5. The chainset (1) according to claim 4, wherein a part of the cable (3) is arranged in the slide (11, 13) and extends between two ends (13A) thereof.

6. A velocipede (10) comprising a rear support wheel (8), a front support wheel (9), a chainset (1) according to one of claims 1 to 5 mechanically coupled to the rear support wheel (8), so that a translational movement (T) of the pedals (2) drives the rear support wheel (8) in rotation,
wherein the toothed wheel (51) is mechanically coupled to the rear support wheel (8), so that a rotational movement of the toothed wheel (51) drives the rear support wheel (8) in rotation.

7. The velocipede (10) according to claim 6, comprising a transmission chain (72) meshing with the toothed wheel (51) and with a pinion (71) mechanically coupled to a hub (81) of the rear support wheel (8).

8. The velocipede (10) according to claim 6 or 7, consisting of a bicycle, and wherein the translational movement (T) of the pedals (2) is in a direction forming a smaller angle of between 60 and 90° with a direction passing through the hub (81) of the rear support wheel (8) and a hub of the front support wheel (9).
